Europäisches Patentamt

European Patent Office

Office européen des brevets

(19)

(11) Publication number: **0 132 306**
**A2**

(12) **EUROPEAN PATENT APPLICATION**

(21) Application number: **84304242.5**

(22) Date of filing: **22.06.84**

(51) Int. Cl.⁴: **G 03 G 15/32**

(30) Priority: **22.06.83 GB 8317001**

(43) Date of publication of application: **30.01.85**
Bulletin **85/5**

(84) Designated Contracting States: **AT BE CH DE FR GB IT LI LU NL SE**

(71) Applicant: **Ross, William Leslie, 5A Crookham Road, London SW6 (GB)**

(72) Inventor: **Ross, William Leslie, 5A Crookham Road, London SW6 (GB)**

(74) Representative: **Allen, Oliver John Richard et al, Lloyd Wise, Tregear & Co. Norman House 105-109 Strand, London, WC2R 0AE (GB)**

(54) **Electrostatic photocopying machine used as a printer and/or high-speed facsimile terminal and an electrode assembly therefor.**

(57) A copier receiver/transmitter terminal operating without any inherent character recognition having mode select control enabling it to operate as a facsimile transmitter, a facsimile receiver or as a photocopier for taking local copies. Each terminal comprises the normal elements of an electrostatic photocopier plus an electronic optical scanner and a printer mechanism. The terminal receives and transmits binary data bits on a standard interface and incorporates a processor under mode select control for assembling output data from the scanner for transmission by encoding signals indicating the start and finish of a page and the start or end of each line and for marshalling the input data arriving at the interface into bytes corresponding to each line of print which is then forwarded to the printer mechanism. The electronic optical scanner comprises a linear array of light sensitive elements coupled in parallel to a CCD device which samples all the elements simultaneously and outputs the sample as a sequence of binary bits. The number of said light sensitive elements, and therefore bits in said sequence, corresponds at least to the maximum number of dots in a line across a page which the human eye can resolve, there being at least 800 elements for an A4 size page. The printer mechanism comprises a linear array of electrodes corresponding in number to the

(Continuation next page)

number of binary bits in the said sequence, which array of electrodes extend across the width of the photocopier print drum in intimate physical contact therewith. Each electrode is individually driven from a common demultiplexer and places a 500 volt charge on the drum corresponding to each binary one bit. The electrode array takes the form of a sheet of resilient material consisting of an assembly of conductive and non-conductive laminae which overlies and is in contact with a parallel array of conductors on a printed circuit sheet or board, there being a corresponding number of conductors as electrodes. Both the scanner and the electrode array are automatically withdrawn from their active positions when the machine is operating in its photocopying mode.

In the preferred arrangement the processor may also receive inputs from an A-D converter so as to provide an X-Y plot printing facility, and moreover during the transmit mode of operation the printing mechanism can be rendered also operative and responsive to the data which is being transmitted, thereby producing a local copy.

"ELECTROSTATIC PHOTOCOPYING MACHINE USED AS
A PRINTER AND/OR HIGH-SPEED FACSIMILE TERMINAL
AND AN ELECTRODE ASSEMBLY THEREFOR"

This invention relates to the adaptation of electrostatic photocopying machines so as to provide, in addition to their normal copying functions, printing, plotting and facsimile functions, and to an electrode assembly for a print mechanism which may be used in said electrostatic photocopying machine.

In the European Patent Specification 0029641 there is disclosed an electrostatic printer in which electrical charges, defining one or more images, are placed directly on the dielectric surface of a selenium drum or the like by means of an electrode system comprising an array of electrodes which are all simultaneously in contact with the drum, the image, or images, being subsequently developed by means of a toner during the same revolution of the drum. Because of this intimate contact of the electrodes with the drum, the drive voltages for the electrodes can be arranged to be relatively low and the charging time is very rapid (when compared with the voltages and charging times involved in the normal corona method of placing charges). The disclosure showed how the principles of that invention are applied to a line printer which may be used to print out data transmitted from any data processing system or any standard CPU. Character interpretation forms no part of this printing process and therefore there is no requirement for intermediate character buffering. A feature of the disclosure was the use as the electrode array of an elastomeric strip in the form of a multi-layered laminate in which the layers, arranged along the length of the strip, were alternately conductive

2.   0132306

and non-conductive and formed of resilient substances.  Such material, known by the trade name "ZEBRA" electrically connects the conductors of an electrode driver printed circuit board to the dielectric surface of the print drum.

The present invention is concerned with the adaptation of that electrode system so as to form a functional element of an electrostatic photocopying machine of the type which copies a whole page of a document in each cycle of operation or an element of an improved facsimile printer or plotter.  Thus adapted, the photocopying machine or printer will operate from a suitable binary bit stream input as an on-line high-speed printer or plotter terminal for a data processing system or as a facsimile receiver.

It is also an object of the invention to extend the functions of the adapted machine by incorporating an optical line scanner which will output a bit stream of binary data in respect of a visual content of any document being "copied" by the machine. When operating in this mode the machine acts as a high-speed facsimile transmitter.

It is a further object of the invention to provide an electrostatic printer for use in a facsimile receiver having a novel electrode system.

Thus according to one aspect of the invention there is provided an electrostatic photocopier, of the type in which a whole page is copied in each cycle of operation, comprising said print drum, a mechanical/optical page scanning system, a corona drum charging means, an image development system, an image transfer system, a drum angular position encoding means and a

3.    0132306

drum cleaning means, said photocopier further comprising a print
mechanism comprising electronic receiving means for receiving
blocks of binary data bits of prescribed size, the blocks of
binary data bits representing a scan along a line on a document
and the number of bits being substantially equal to or greater in
number than the greatest number of dots in said line that can be
reproduced and be resolved unaided by the normal average human eye,
an electrode system comprising a linear array of electrodes, a
corresponding number of electrode driver circuits, each connected
to a respective electrode in said array, there being as many
electrodes as the said binary data bits in the block, and a
demultiplexer circuit connected between said receiving means and
said driver circuits for transferring the binary data bits to
respective corresponding ones of said driver circuits, said
receiving means transferring said blocks of binary data bits to
said demultiplexing means under the control of said drum angular
position encoding means, and wherein the electrodes in said
linear array of electrodes each consist of a resilient material,
said array being formed by a composite laminated material which
is provided with support means and in which the laminae comprise
alternate conductive and non-conductive resilient elements which
during printing operations are in positive intimate contact
with the drum across the width thereof.  The preferred embodiment
of the invention further includes one or more standard interfaces,
input/output processor including a page memory, an analog/digital
converter for providing an X-Y plot facility and an electronic
optical line scanning means arranged to intercept the optical

4.

0132306

image of the photocopier before it impinges upon the print drum and produce an electronic scan of said image at least once for each line scanned by the mechanical/optical scanning system of the photocopier, said scanning means transmitting the results of the electronic scan without character recognition, and comprising a linear array of light sensitive elements spanning the full width of said optical image, the number of said elements being at least equal to the number of bits in said block of binary data bits and electronic means for assembling the signals generated by said light sensitive elements into a block of binary data bits ready for transmission therefrom.

In another aspect the invention provides an electrostatic line printer of the type having an array of electrodes in intimate physical contact with a rotating print drum, the latter receiving a plurality of charges corresponding to a plurality of binary bits received by the printer representing a scan across a line on a document and said array extending substantially across the entire width of the drum, said printer developing an image on the drum and printing out said image in a single revolution of the drum, wherein the electrode array comprises a rigidly supported non-stretchable flexible sheet on which there is deposited a parallel array of electrical conductors, corresponding in number to the number of electrodes, said conductors being terminated at a linear cantilevered free edge of the sheet which is arranged adjacent to the print drum and parallel to the axis of rotation thereof, each said conductor being provided, at said free edge, with an adherent electrically conductive tip formed of resilient cured resin and each conductor and its associated tip being separated from its neighbouring conductor or conductors by an infill of non-conductive resilient cured resin, said conductive tips and said cured resin together forming a laminated sheet of uniform thickness adherent to and overlying said free edge of the said non-stretchable flexible sheet wherein the pitch dimension of the conductive laminae is of the order of 0.01 inch (0.25 mm) or less.

Hereinafter the invention is described by way of example with reference to the embodiments shown in the accompanying drawings, wherein:

Figure 1 shows in diagrammatic form the relevant mechanical parts of a typical photocopier embodying a basic form of the invention;

Figure 1(a) shows the embodiment of Figure 1 in greater scale so as to illustrate the means for supporting the strip of laminate material in contact with the print drum;

Figure 2 shows the print board of a second embodiment of the invention together with one driver board;

Figure 3 shows the electrode sheet of the said second embodiment;

Figure 4 shows the final assembly of the print board with the driver boards and electrode sheet;

Figure 5 is an enlarged fragmentary view of the electrode sheet, showing the electrode tips;

Figure 6 is an enlarged diagrammatic view of the printer assembly in a typical photocopier, showing the mounting arrangements of the electrode assembly;

Figure 7 illustrates another form of photocopier embodying the invention; and

Figure 8 is a schematic representation of the control circuits of a preferred embodiment of the invention.

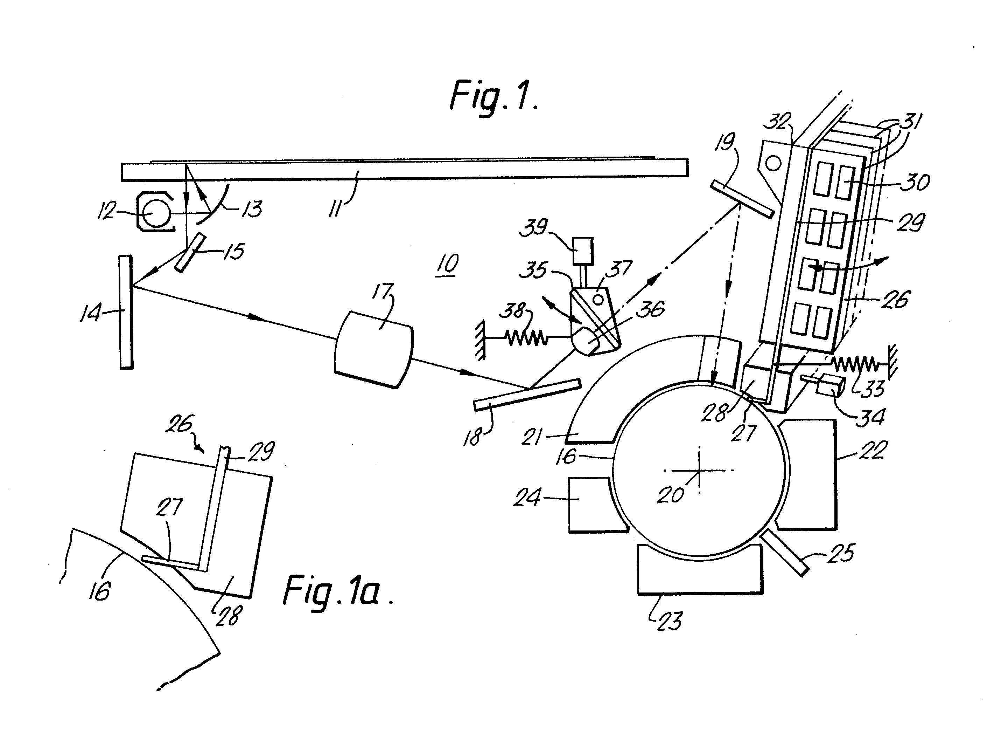

Referring to Figures 1 and 1a, there is illustrated schematically the basic elements of an electrostatic photocopier 10 which has been adapted to perform the functions of the invention. The precise optical/mechanical arrangement by means of which a document is optically scanned during a copying operation need not be considered in any detail as several methods are commonly employed and are well known and all are suitable for the purposes of the present invention. In the chosen example the document to be copied is placed, facing downwards, on the upper surface of a transparent sheet 11, usually of glass. A light source 12 and first mirror 13 together travel over the exposed page relative to a third mirror 14. A second mirror 15 moves moves between the third mirror and the first mirror and light source so as to throw the image onto the third mirror. After its reflection at the third mirror (14) the image is collected by a lens system 17 and is further reflected in mirrors 18 and 19 whereafter it is projected to a specific location on the cylindrical surface of a rotating selenium drum 16. The image which is transmitted through this system comprises a strip across the transverse dimension of the document being copied, having a height dimension which is a prescribed fraction of the height of a line of normal print. The image is focused on the drum 16 along a line which is parallel to the axis 20 of the drum.

The photocopier 10 further comprises the following standard items circumferentially arranged around the drum 16: a corona assembly 21 for charging the drum, a development system 22 for providing an inked image on the drum, a transfer system 23 at which the inked image is transferred to a sheet of paper, said system including a paper feed for making copies, and a drum-cleaning means 24 for removing surplus ink remaining after the transfer process. A drum position encoder 25 is also shown circumferentially arranged, but in practice this item may take several forms and may be indirectly coupled to the drum.

Physically disposed between the corona assembly 21 and the development system 22 is an electrode assembly 26 comprising essentially a strip 27 of the said laminate material suitably physically supported in an insulating mount 28 and arranged to physically contact the circumferential surface of the drum across the active width thereof. The said strip 27 is mounted at an end edge of an electrode printed circuit board 29 containing an array of conductors arranged over the width of the drum and provides an array of dedicated electrically conductive paths between the said conductors of the electrode board 29 and the drum. The conductors of the electrode board 29 are connected in groups to respective ones of a plurality of electrode driver circuits 30 contained on subsidiary boards 31 mounted on the electrode board 29.

In a typical arrangement the electrode board 29 comprises an array of 800 conductors terminating at the edge of the board at a line which is approximately 8 inches (20 cm) long. With such an arrangement the nominal pitch of the electrodes is 0.01 inch (0.25 mm). The charge size and spacing is found to be such that with the use of normal development and transfer techniques in the printing process the human eye is unable to distinguish the images resulting from adjacent electrodes.

The electrode board 29 is clamped to a hinged mount 32 which is normally biased away from the drum by a spring 33 so that when the machine is to operate as a photocopier the electrode assembly (26) is retracted to a position where it does not interfere with the normal functioning of the photocopier.

When the machine operates as a printer, the electrode assembly (26) is pivotally displaced by means of solenoid 34 so that the edge of the strip 27 contacts the drum. Data in the form of a block of 800 bits of binary data is inputted from a data source, such as a facsimile receiver terminal or a receiver coupled to a data processing system, to an electronic demultiplexing circuit (not shown in Figure 1) associated with the electrode driver circuits 30. Such electronic apparatus is conventional and includes means for signalling to the source when it is ready to receive a data byte and includes a clock generator responsive to the drum position encoder 25. The photocopier optical scanning system is left operative as is also the corona assembly, but as the photocopier is arranged so as to see only a plain white background, the drum is fully discharged when it reaches the electrode assembly.

The machine operates at its normal speed of operation for a photocopier and is therefore capable of printing and delivering about 30 full pages per minute, i.e. it has a print speed of about 75,000 characters per minute, limited solely by the speed of operation of the photocopying mechanism.

To enable the machine to operate as a facsimile transmitter terminal there is mounted in the machine alongside the optical path of the image an electronic optical line scanner 35, comprising an array of light sensitive elements 36 arranged side by side across the entire width of the image in the optical path. The optical line scanner also has a hinged mount 37 which is biased by a spring 38 so as to be pivoted out of the path of the optical image during normal photocopying operation. During operation of the machine as a facsimile transmitter, the array of elements are pivotally displaced on their mount into the said optical path by a solenoid 39. The light sensitive elements are simultaneously sampled several times whilst each line of print on the document being copied is optically scanned. An electronic scanning circuit 40 scans all the light sensitive elements in turn and converts the output into a serial bit stream comprising the said 800 binary data bits which it then forwards to a conventional communications transmitter (not shown) which also encodes control information in the data stream which has been generated by means of the drum angular position encoder 25.

10.

The optical arrangement is such that only a portion of the depth of the line of print on the document being scanned is viewed at any instant by the light sensitive elements, comparable with the number of samples made by these light sensitive elements for each line scanned.

In its operative position the optical line scanner 34 intercepts the beam along its path between mirrors 18 and 19. At this location the beam movement resulting from the document scanning operation is small. The output signal of the electronic scanning circuit comprises a sequence of bits corresponding in number to the number of elements in the array. Signals are encoded into this output signal to mark the ends of the lines, the beginning and end of each page, and the drum position. The encoded signal is fed to a standard data transmission equipment (D.T.E.).

A suitable electronic optical line scanner is that marketed by the RETICON Corp. of California, U.S.A., and known as the 'H' series type. It comprises a monolithic self-scanning linear solid-state photo-diode array having its optical elements (i.e. an array of semiconductor diodes) coupled into an integrated charged-coupled circuit arrangement. The scanner incorporates its own electronic scanning circuit which causes the array of diodes to be electrically scanned at an appropriate frequency. The information is clocked out serially in the form of a sequence of ON/OFF bit signals. As these arrays may have a greater number of photo cells than the 800 conductors on the printed circuit board 29 of the electrode array, a number of

cells are blanked off so that the active cells correspond precisely to the number of conductors. However, since photo cell arrays are available in which the total number of cells available are multiples of the number of said electrode conductors, logic systems may easily be added in which the best one of two or several signals from adjacent photo cells is selected for transmission, thereby improving the discrimination of the scanner.

In the operation a local copy is preferably made at the same time that the data is scanned by the optical line scanner and transmitted. This is done by placing the print mechanism on line during a transmission, i.e. in effect feeding the output of the transmitter signals to the input circuits of the electrode assembly 26 via the receiver circuit,the copy thus being printed as it is generated and at the same time as it is transmitted. Alternatively, the machine could operate in its normal mode so as to take a photocopy. To facilitate the latter operation it is convenient to arrange the optical line scanner so that it intercepts a secondary beam which is split from the main beam. (This arrangement is not shown.)

It should be noted that the speed of operation of the apparatus when it is functioning as a facsimile transmitter or receiver is exactly the same as the speed of operation when the apparatus is operating as a photocopier. Documents and drawings may be therefore copied and transmitted at a very rapid rate. When operating as a receiver the apparatus may be arranged such that the receiving mode can be selected by means of a remote instruction transmitted with the transmitted signal.

In the machine described hereinbefore practical limitations are encountered with the electrode arrangements because of the constraints imposed by the format of the present-day generation of photocopiers, in particular the parameters of the print drum. Thus it is found that for the formation of commercially satisfactory print the drive voltage for the electrodes needs to be of the order of 500 volts. Proprietary laminate strips of the required form are not available for such a voltage rating, having insufficiently high manufacturing tolerances particularly in respect of the uniformity of the thickness of the layers along the length of the strip. Moreover the absence of dimensional stability along this length increases the possibility of insulation breakdown with 500 volts applied to the electrodes.

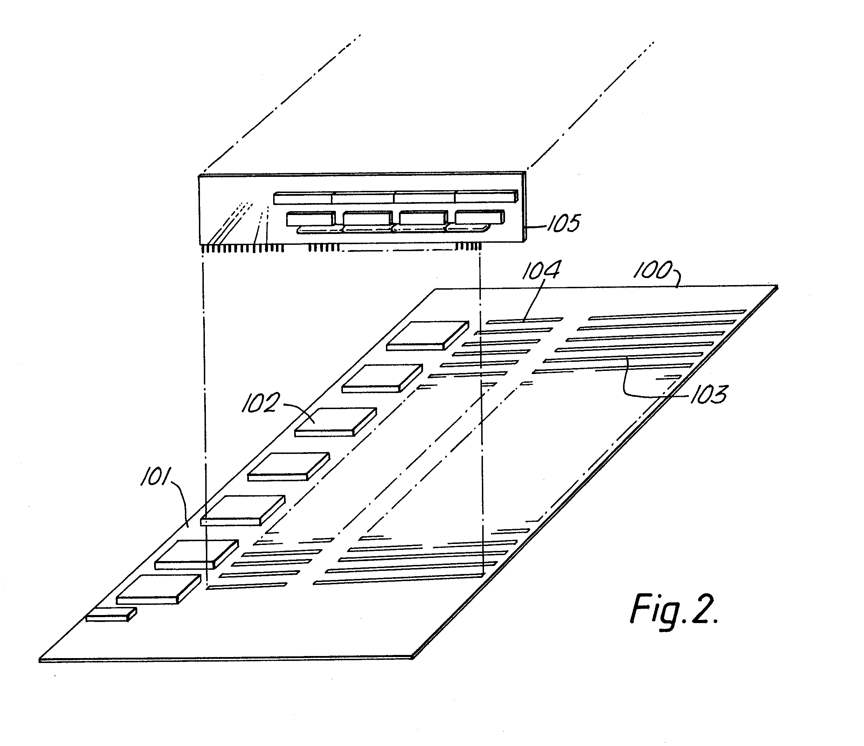

In Figure 2 there is illustrated a preferred arrangement for the electrode assembly. A rigid board 100, called hereinafter the print board, which extends across the width of the machine, carries a two-level printed circuit 101 comprising a demultiplexer 102 along the left-hand portion (as seen in Figure 2) and a first array of twenty-five linear junction connectors 103 along the right-hand portion. Each junction connector provides for the independent connection of thirty-two lines. A second array of linear connectors 104, corresponding in number with the junction connectors and aligned in a one-to-one relationship therewith, are provided on the print board between the printed circuit and the array of junction connectors. Connectors 104 are connected by the said printed circuit to the demultiplexer, each one receiving a different 32-bit portion of

0132306

13.

the input signal. Connectors 103, 104 may be mounted on either the upper or the lower side of the board relative to the demultiplexer circuit according to the convenience of the mounting of the assembly in the machine 10.

Into each of the twenty-five pairs of connectors 103, 104, thus defined are plugged respective electrode driver circuit boards 105 (only one of which is shown), each of which boards receives a respective 32 bit input of TTL logical signal level (i.e. 5 volts) plus control signals from the demultiplexer on the left-hand half of the board, via the respective connector in the said second array of connectors, feeds the 32 bits to 32 respective latches contained in four IC's at the outputs of which there are connected 32 drivers also contained in four IC's, and provides a bit output at 500 volt levels on each of thirty-two lines respectively connected to the corresponding junction connector 103. Thus in operation the demultiplexer receives from a local receiver a serially transmitted block of data comprising the 800 binary bits representing a scan of a vertical section of a line across the width of the document, divides this block into twenty-five portions each 32 bits wide, and transmits each portion to a respective one of the electrode driver circuit boards 105.

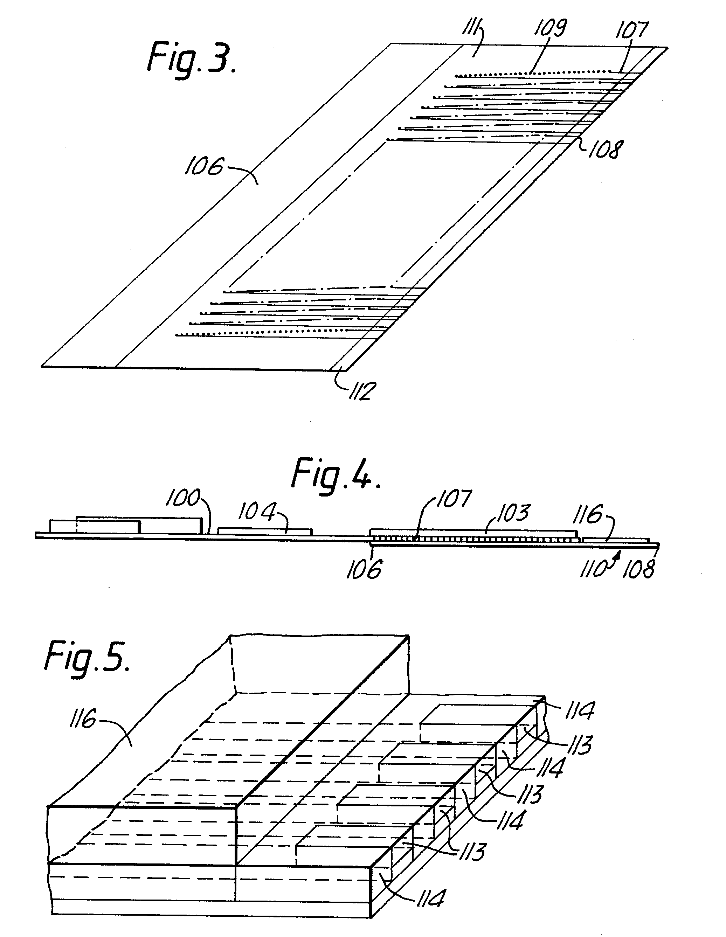

Referring now to Figure 3, there is shown an insulative sheet called herein the "electrode sheet", 106 which is flexible in shear and rigid in the directions along the plane of its surface, i.e. it is flexible but non-stretchable. On this electrode sheet is carried an array of 800 parallel conductors 107 each of which extends to a common edge 108 of the sheet and extends in the opposite direction to a respective plated hole 109. These holes are arranged in lines and correspond in position exactly with the junction connectors of the print board so as to receive respective terminal posts provided on these connectors. On assembly (as shown in Figure 4) the sheet 106 is bonded to the print board after being presented so that the posts enter the holes. The posts are then soldered into their respective holes. The arrangement is such that the sheet overlaps the print board with the free ends of the conductors 107 on the overhanging portion 110. To this overhanging portion there is adhesively bonded a further rigid board 116 which extends over the full width of the sheet 106 and is disposed on the same side thereof as the print board 100 and is positioned so as to be contiguous therewith. This construction provides an integral hinge 117 along the line between the boards, the purpose of which is described hereinafter.

In an alternative arrangement in place of linear connectors 103, 104, the print board is provided with arrays of plated holes, the positions of the holes corresponding with the connector positions of the previous arrangement. On assembly the holes 109 on the electrode sheet 100 are soldered to the corresponding plated holes in the print board. The soldering can be carried out in such a way as to preserve the identity of the plated holes, in which case they serve as sockets so as to receive the terminals of the driver circuit boards. Alternatively, with this arrangement all the driver circuit boards can be plugged into the print board before the aforesaid soldering takes place, so that all the component boards and the electrode sheet 100 become soldered together in one operation. In the preferred arrangement, the print board 100 and the portion of the electrode 100 bonded thereto are encapsulated in resin so as to increase the electrical break-down strength of the electrode array, the overhanging portion of the electrode sheet being left free of the encapsulating material so as to preserve the flexibility of the hinge.

Before the assembly operation described above the surface portion of the electrode sheet bearing the conductors 107 is covered uniformly with an insulative resin 111 (called in the art solder resist) except for a strip 112 a few millimetres wide at that edge which is free on assembly of the sheet to the print board. With the preferred arrangement as illustrated in the fractional view of Figure 5, in this strip each of the conductors is covered with a discrete adherent layer of cured conductive silicone resin so as to form an array of resilient tips 113 and the spaces 114 between the conductors, and any space between the conductive resilient tips and the layer of solder resist 111 or at the ends of the sheet, is filled up to the surface of the resilient tips with a cured flexible non-conductive silicone resin. Thus it will be observed that this construction has provided an electrode array similar to that provided by the previously proposed laminate material but in which the electrode elements are dimensionally stable and are precisely dimensioned and spaced, being adherent to and supported upon the electrode sheet 106, and being permanently connected to respective bit lines on a one-to-one basis.  Tests have shown that this arrangement will successfully withstand 500 volts between the electrodes without any danger of breakdown in normal operation when in contact with the print drum.

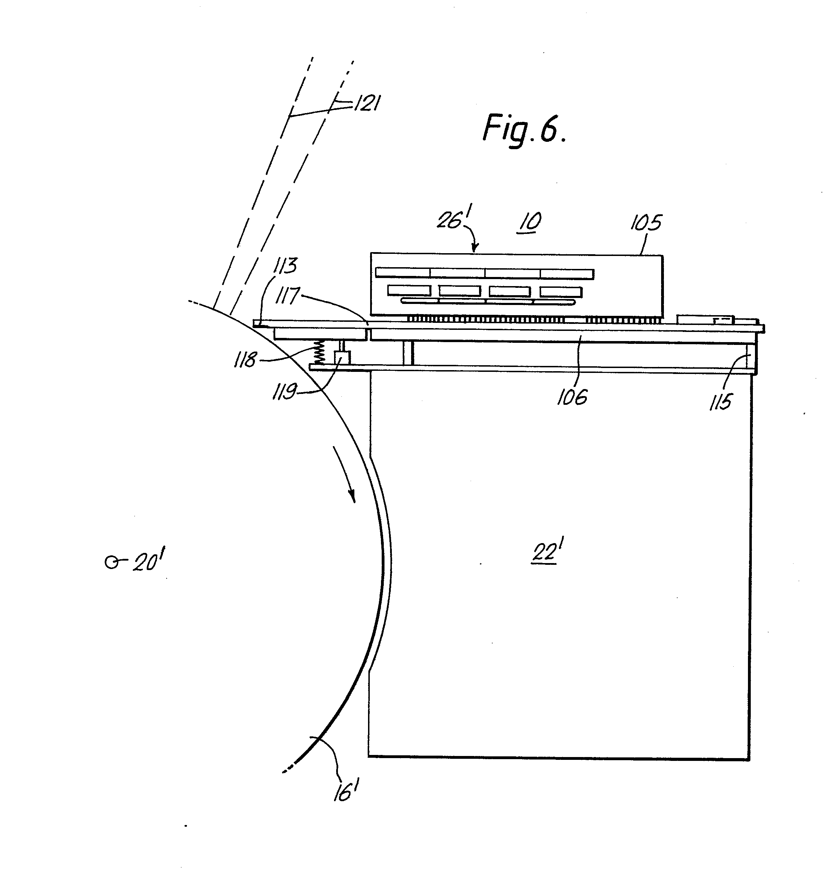

Figure 6 shows the arrangement of the print mechanism based upon the second embodiment of the invention in a typical photocopier, the various primed references indicating the same parts as the unprimed references in Figure 1.  As the internal arrangements of photocopiers vary, dependent upon the manufacturers' designs, the precise mechanical form and arrangement of the printer mechanism will also vary but such differences are matters of mechanical adaptation within the normal abilities of a skilled worker in the art and are not considered in any detail hereinafter.  All such modifications and adaptations are considered to be within the scope of the monopoly defined by the present claims.

Thus in Figure 6 there is illustrated a section through an example of the electrode assembly 26'mounted within a photocopier 10 adjacent to the print drum 16.  Only the elements adjacent to the electrode assembly are shown.  The actual form of the electrode assembly is dependent upon the construction of, and space available within, the adapted photocopier.  The assembly comprising the print board 100, the electrode sheet 106 and the electrode driver circuit boards 105 are mounted on the development unit 22' by means of a supporting frame 115 to which print board 100 is fastened, the free portion of the electrode sheet 106 bonded to the board 116 being disposed so as to be in contact with the print drum 16 when the sheet 106 is in its unflexed planar condition. The edge of the electrode sheet 106 overhangs the board 116 by a distance which is slightly greater than the length of the resilient tips 113. The board 116 is biased in a clockwise direction (as seen in Fig. 5) about the said integral hinge 117 by means of a compression spring 118 into a limiting position in which the electrode sheet 106 is flexed away from the drum. In this condition the electrodes do not contact the drum and the printer is inoperative.

A solenoid 119 attached between the board 116 and the frame 115, when actuated, pulls the board 116 about the hinge 117 towards the drum 16. This flexes the free end of the electrode sheet towards the drum so that the latter is wiped by the electrode tips 113. This is the operative condition of the printer. In order to avoid overprinting, and confusion, the optical image projected by the machine onto the print drum, which is depicted by broken lines 120, should be of an entirely white sheet.

The electronic optical line scanner 35' operates in this embodiment in the manner previously described in relation to Figure 1. No character recognition is involved, and the electrode system in the same machine may be made operative at the same time and be connected on line so as to print out the image as it is scanned.

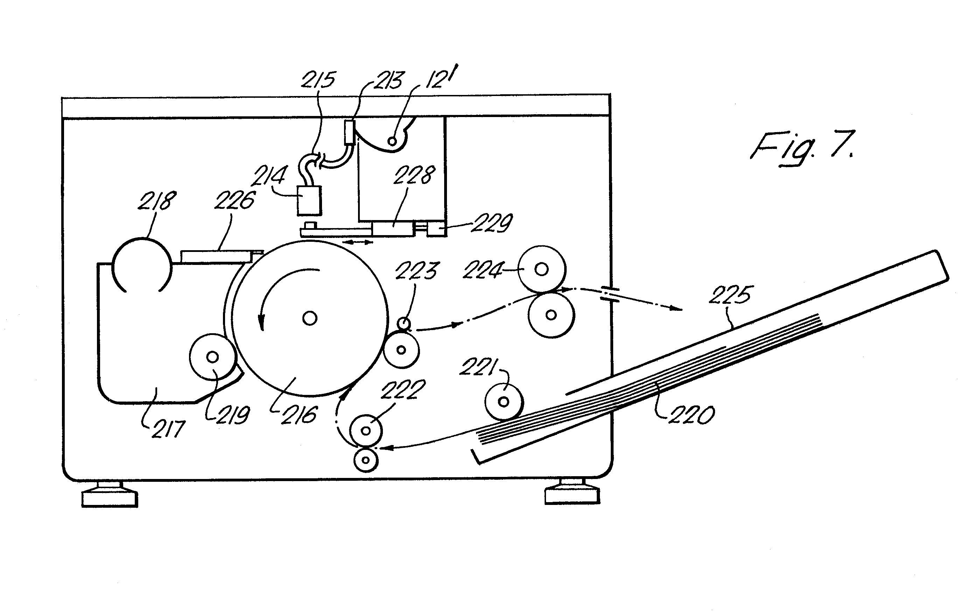

A further example of a photocopier adapted to the purposes of the invention is shown diagrammatically in Figure 7. In this arrangement the optical mechanical line scanner comprises, in addition to the travelling light source 212, a travelling object lens 213 and a fixed projection lens 214. The two lens systems are linked by a fibre optic cable 215. The photocopier has a print drum 216, a development unit 217 with a tubular hopper 218, a magnetic inking roller 219, a feed paper cassette 220, feed rollers 221, 222, paper-stripping rollers 223 and pressure rollers 224. The top 225 of the cassette holder acts as a printed sheet collecting tray. The machine also contains the other normal components of a photocopier (or their equivalents) but as it operates on a two drum revolutions cycle these have been omitted in the interest of clarity.

The printer mechanism 226 is conveniently mounted over the top of the development unit. As shown, the electronic optical line scanner 227 is positioned on the right and has a sliding mount 228 so that it may intercept the image or be totally withdrawn therefrom in dependence upon whether it is operative or not. The sliding movement is provided by means of a solenoid 229. Apart from these details the arrangement and operation is as previously described.

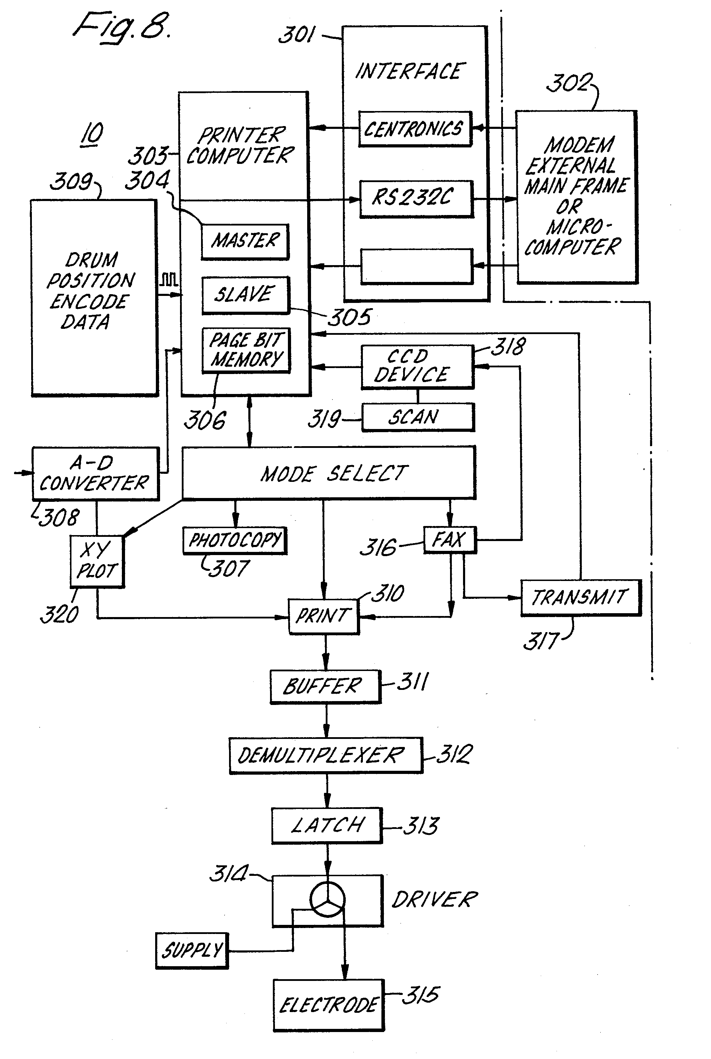

Referring to Figure 8, which illustrates the basic control functions of the apparatus, a set of standard interfaces 301, for example "Centronics" or "RS232C", receive binary data from an external source 302 such as a modem, a main frame computer or a microcomputer. The respective interface inputs the received data to an internal printer computer 303 comprising a

19.

master unit 304, a slave unit 305 and a page bit memory 306. The master unit contains the program and the internal processor control circuits.  The master and slave units operate alternately to process the received data and feed it to the page bit memory 306.  The latter accepts bytes of data corresponding to each scan line and has sufficient line storage capacity to store a full page in the form of binary bits.  Analog signals may also be received from one or more external sources by means of an A-D converter 308, the data being processed by the computer so as to provide an X-Y plot.  Internal inputs to the computer 303 comprise, in addition to the signals from the interfaces and the A-D converter, the following data streams:  drum position encode data, scan data for either internal printing or for external transmission, transmit control and mode status signals.  A mode select switch enables machine function selection between the following basic functions:

> Photocopying
>
> Receive and Print
>
> Scan and Transmit (FAX)
>
> Scan, Transmit (FAX) and Print
>
> X-Y Plot.

Selection of the photocopying mode 307 disables (normally) the printer mechanism, the electronic optical line scanner and the A-D converter.  In this mode the machine operates with normal photocopying facilities.  In the print mode 310 the machine responds to data on the interface 301.  Under the general control of the drum position encoder 309 each line of data is transferred from the page bit memory 306 through the buffer 311 and the demultiplexer 312 to the individual respective bit latches 313 from whence the signals are amplified in the driver 314 and fed to the corresponding electrode 315.

Two facsimile functions are indicated by control outputs from the facsimile (FAX) selection mode 316, one enabling a transmit-only function 317 and the other enabling the printer mechanism. In both cases an output enables the CCD device 318 of the electronic scan function. As previously mentioned, the electronic scanner 319 has its own local control and, when enabled, outputs bytes of data corresponding to a scan of a complete line. The bytes are assembled in the page bit memory 306 and thereafter each page is processed in the internal computer into a suitable form and transmitted via the interfaces. In the transmit and print function the printer 310 also receives the aforesaid bytes together with appropriate control signals.

In the X-Y plot mode 320, the input signals are used as addresses for storing binary bits in the page bit memory 306. Both X and Y channels may be dedicated to external data or alternatively one of the channels can be clocked by means of a selected clocking signal so as to provide a time variant function. Selection of the X-Y plot mode automatically enables the printer mechanism 310.

21.

<u>CLAIMS</u>

1. An electrostatic photocopier, of the type in which a full page is copied in each cycle of operation, comprising a print drum, a mechanical/optical page scanning system, a corona drum charging means, an image development system, an image transfer system, a drum angular position encoding means and a drum cleaning means, said photocopier further comprising a print mechanism comprising electronic receiving means for receiving blocks of binary data bits of prescribed size, the blocks of binary data bits representing a scan along a line on a document and the number of bits being substantially equal to or greater in number than the greatest number of dots in said line that can be reproduced and be resolved unaided by the normal average human eye, an electrode system comprising a linear array of electrodes, a corresponding number of electrode driver circuits, each connected to a respective electrode in said array, there being as many electrodes as the said binary data bits in the block, and a demultiplexer circuit connected between said receiving means and said driver circuits for transferring the binary data bits to respective corresponding ones of said driver circuits, said receiving means transferring said blocks of binary data bits to said demultiplexing means under the control of said drum angular position encoding means, and wherein the electrodes in said linear array of electrodes each consist of a resilient material, said array being formed by a composite laminated material which is provided with support means and in which the laminae comprise alternate conductive and non-conductive resilient elements which during printing operations are in positive intimate contact with the drum across the width thereof.

2. An electrostatic photocopier according to Claim 1 further including an electronic optical line scanning means arranged to intercept the optical image of the photocopier before it impinges upon the print drum and to produce an electronic scan of said image at least once for each line scanned by the mechanical/optical scanning system of the photocopier, said means transmitting the results of the electronic scan without character recognition, and comprising a linear array of light sensitive elements spanning the full width of said optical image, the number of said elements being at least equal to the number of bits in said block of binary data bits and electronic means for assembling the signals generated by said light sensitive elements into a block of binary data bits ready for transmission therefrom.

3. An electrostatic photocopier according to Claim 1 or Claim 2 wherein said electrode system is mounted on a biased movable support so as to be normally biased out of contact with the print drum, and said print mechanism includes a solenoid which is actuated so as to move the electrode assembly into said intimate contact with the drum when the printer mechanism is functioning.

4. An electrostatic photocopier according to Claim 2 or Claim 3 when appendant to Claim 2 wherein said electronic optical line scanning means is mounted on a movable support

23.                    0132306

which is normally biased by a spring so that the scanning means is normally out of alignment with the path of the optical image, there being solenoid means provided which, when actuated, moves the electronic optical line scanning means against the bias of the said spring so as to intercept the said optical image.

5. An electrostatic photocopier according to Claim 2 wherein the optical path of the image includes beam splitting means which provides a secondary beam corresponding to the image and said electronic optical line scanning means is arranged to scan the secondary beam.

6. An electrostatic photocopier according to any preceding claim wherein the electrode array comprises a rigidly supported non-stretchable flexible sheet on which there is deposited a parallel array of electrical conductors, corresponding in number to the number of electrodes, said conductors being terminated at a linear cantilevered free edge of the sheet which is arranged adjacent to the print drum and parallel to the axis of rotation thereof, each said conductor being provided, at said free edge, with an adherent electrically conductive tip formed of resilient cured resin and each conductor and its associated tip being separated from its neighbouring conductor or conductors and tip or tips by an infill at said free edge of non-conductive resilient cured resin, said conductive tips and said cured resin together constituting the portion of the electrode array which contacts the drum and forming a laminated sheet of uniform thickness adherent to and overlying said free edge of the said

24.                                              0132306

non-stretchable flexible sheet wherein the pitch dimension of the conductive laminae is of the order of 0.01 inch (0.25 mm) or less.

7.  An electrostatic photocopier according to Claim 6 wherein said non-stretchable flexible sheet is adhesively bonded in overlapping relation to a first rigid board bearing a printed circuit comprising a demultiplexer to which the conductors on the sheet are connected, and to said overlapping portion of the sheet a second rigid board is adhesively bonded so as to be adjacent to but separated from said first board, said second board being arranged on the sheet whereby said cantilevered free edge of the sheet overhangs said second board and the latter is articulated to said first board by means of the flexible sheet.

8.  An electrostatic photocopier according to Claim 7 when appendant to Claim 3 wherein said solenoid is mounted on a frame supporting said first rigid board so as to act on the said second board, and the biasing means comprises a spring attached to the frame at one of its ends and to the second board at the other end.

9.  An electrostatic photocopier according to Claim 2 or any claim appendant thereto further comprising a standard signal interface, a printer computer, having a page bit memory, and a mode select means, the latter enabling any one of the following main functions:

      (a)  Photocopying

      (b)  Receive and Print

      (c)  Scan and Transmit

wherein in the photocopying mode the print and scanning functions are inoperative, in the receive and print mode the computer processes the binary data signals on the interface as a succession of line scans which data is stored as a sequence of lines comprising a page in the page bit memory and despatched a line at a time to the print mechanism under the overall control of the drum position encoder, and in the scan and transmit mode each line of binary bits is stored in the appropriate order in the page bit memory and is then processed by the computer for transmission from the machine via the interface.

10. An electrostatic photocopier according to Claim 9 wherein the mode select means selectively enables the following additional functions:

       (d)  Scan, transmit and print

       (e)  X-Y plot

wherein the scan, transmit and print function includes the same operations as the scan and transmit function but in addition enables the print mechanism so that the latter prints the lines of binary data stored in the page bit memory so as to print a local copy of the transmitted data, and in the X-Y plot function analog data in one or both of X and Y channels is converted in an analog-to-digital converter the signals being used to address the page bit memory to provide locations for storing binary bits, and the contents of the page bit memory are despatched in line sequence to the print mechanism under the control of the drum position encoder.

11. An electrostatic photocopier according to Claim 10 wherein one of said X and Y channels receives a selected clock signal.

12. An electrostatic line printer having an array of electrodes in intimate physical contact with a rotating print drum during printing operations, said drum receiving from the electrodes a plurality of charges corresponding to a plurality of binary bits received by the printer which represents a scan across a line on a document, said array extending substantially across the entire width of the drum and said printer developing an image on the drum of an entire page and printing out said image in a single print cycle of operation, wherein the electrode array comprises a rigidly supported non-stretchable flexible sheet on which there is deposited a parallel array of electrical conductors, corresponding in number to the number of electrodes, said conductors being terminated at a linear cantilevered free edge of the sheet which is arranged adjacent to the print drum and parallel to the axis of rotation thereof, each said conductor being provided, at said free edge, with an adherent electrically conductive tip formed of resilient cured resin and each conductor and its associated tip being separated from its neighbouring conductor or conductors and tip or tips by an infill at said free edge of non-conductive resilient cured resin, said conductive tips and said cured resin together constituting the portion of the electrode array which contacts the drum and forming a laminated sheet of uniform dimension adherent to and overlying said free edge of the said non-stretchable flexible sheet wherein the pitch dimension of the conductive laminae is of the order of 0.01 inch (0.25 mm)

0132306

or less.

13. An electrostatic line printer according to Claim 9 wherein said non-stretchable flexible sheet is adhesively bonded in overlapping relation on a first rigid board bearing a printed circuit comprising a demultiplexer to which the conductors on the sheet are connected, and to said overlapping portion a second rigid board is adhesively bonded so as to be adjacent to but separated from said first board, said second board being arranged on the sheet whereby said cantilevered free edge of the sheet overhangs said second board and the latter is articulated to said first board, there being a spring and a solenoid each mounted between a frame supporting said first rigid board and the second board, the solenoid operating so as to provide pivotal movement of the second board whereby the electrode array comes into contact with the print drum, and the spring operating so as to bias the second board thereby restoring the latter to a limiting position away from the drum after de-activation of the solenoid.

Fig.1.

Fig.1a.

Fig.2.

0132306

*Fig. 3.*

106

111  109  107

108

112

*Fig. 4.*

100  104  107  103  116

106  110  108

*Fig. 5.*

116

114
113
114
113
114
113
114

0132306

Fig.6.

Fig. 7.

0132306

Fig. 8.